# EUROPÄISCHE PATENTSCHRIFT

(11) **EP 1 034 671 B1**
(45) Veröffentlichungstag und Bekanntmachung des Hinweises auf die Patenterteilung: **24.09.2003**
(21) Anmeldenummer: 98966177.2
(22) Anmeldetag: 24.11.1998
(51) Int. Cl.: H04Q 7/22, H04Q 7/32

(54) **VERFAHREN ZUM ENDGERÄTSEITIGEN EMPFANGEN UND VERARBEITEN VON VON EINER ZENTRALE AN EINE VIELZAHL VON NICHT DEFINIERTEN TEILNEHMERN AUSGESENDETEN INFORMATIONEN UND ENDGERÄT MIT MITTELN ZUM DURCHFÜHREN DES VERFAHRENS**
METHOD FOR RECEIVING AND PROCESSING INFORMATION EMITTED FROM A CENTRAL STATION TO A PLURALITY OF NON-DEFINED SUBSCRIBERS BY A TERMINAL AND A TERMINAL WITH MEANS FOR CARRYING OUT THE METHOD
PROCEDE DE RECEPTION ET DE TRAITEMENT PAR UN TERMINAL D'INFORMATIONS ENVOYEES PAR UNE CENTRALE A PLUSIEURS ABONNES NON DEFINIS ET TERMINAL AVEC DES MOYENS POUR LA MISE EN OEUVRE DU PROCEDE

(30) Priorität: 24.11.1997 DE 19754335
(43) Veröffentlichungstag der Anmeldung: 13.09.2000
(73) Patentinhaber: Vodafone Holding GmbH, 40213 Düsseldorf (DE)
(72) Erfinder: MÖHLENKAMP, Klaus, D-40545 Düsseldorf (DE); WICHURA, Torsten, D-40547 Düsseldorf (DE)
(74) Vertreter: Meissner, Peter E., Dipl.-Ing.
(86) Internationale Anmeldenummer: DE9803510
(87) Internationale Veröffentlichungsnummer: WO99027717

(56) Entgegenhaltungen:
- EP-A- 0 752 793
- WO-A-98/10605
- GSM Telecommunication Specification; Digital Cellular Telecommunication System (Phase 2+); Technical Realization of Short Message Service Cell Broadcast (SMSCB) (GSM 03.41, VERSION 5.3.0), 00-07-1996 XP002101913

## Beschreibung

Die Erfindung betrifft ein Verfahren zum endgerätseitigen Empfangen und Verarbeiten von von einer Zentrale an eine Vielzahl von nicht definierten Teillnehmem ausgesendeten Informationen und ein Endgerät mit Mitteln zum Durchführen des Verfahrens.

Es sind aus dem GSM-Standard Endgeräte in Form von Mobiltelefonen bekannt, welche sich zum Ermöglichen eines herkömmlichen Mobiltelefon-Betriebs in die am aktuellen Ort des Mobiltelefons am besten empfangbare Basisstation einwählen, wofür Kommunikationsprotokolle (beispielsweise in GSM) vorgesehen sind, gemäß welchen insbesondere die eigene Telefonnummer des Mobiltelefons, die IMSI (im GSM) usw. übertragen werden. Mit einem derartigen Endgerät in Form eines Mobiltelefons können von einer Zentrale über einen Sprachkanal oder einen Kurznachrichtenkanal des Mobilfunknetzes ausgesandte Informationen empfangen werden. Hierfür ist jedoch ein Mobiltelefon und eine Mobilfunkteilnehmer-Identifikationskarte (SIM) erforderlich. Das Mobiltelefon und die Karte verursachen endgerätnutzerseitig Kosten und überdies beim Mobilfunknetzbetreiber einen Aufwand für ihre Verwaltung.

Die EP 0 752 793 A2 offenbart den Empfang von Kurznachrichten über einen Kurznachrichten-Rundspruch-Kanal durch ein Endgerät mit einer Sendeeinrichtung, welches in ein Mobilfunknetz eingebucht ist. Die Veröffentlichung GSM-ETSI-Standard 03.41 offenbart Details eines herkömmlichen Cell-Broadcast. Den Empfang durch Endgeräte ohne Sendeeinrichtungen und ohne Einbuchung in ein Mobilfunknetz offenbart diese Schrift nicht.

Gemäß Art. 54(3) EPÜ wird noch die WO-A- 98 10605 genannt, aus der die Übertragung von teilnehmerunabhängigen Informationen als Rundspruchnachrichten von einer Zentrale über einen Kanal eines Mobilfunknetzes an eine Vielzahl von Teilnehmern bekannt ist.

Aufgabe der Erfindung ist deshalb die Schaffung eines Verfahrens zum Empfang von Informationen in einem Mobilfunknetz sowie eines Endgerätes unter möglichst weitgehender Kostenoptimierung beim Endgerät-Nutzer und Verwaltungsaufwandsoptimierung beim Mobilfunknetzbetreiber durch Vereinfachung des Verfahrens bzw. des Endgerätes. Die Aufgabe wird durch die unabhängigen Ansprüche gelöst.

Dadurch, daß erfindungsgemäß ein Empfang endgerätseitig ohne Aufnahme einer bidirektionalen Kommunikationsverbindung zur Zentrale über das Mobilfunknetz (oder anders ausgedrückt passiv) erfolgt, ist netzbetreiberseitig keine Verwaltung einer Mobilfunkteilnehmer-Telefonnummer einschließlich Abrechnung und insbesondere auch kein Aufwand für das Einwählen eines Mobilfunkgerätes in das Mobiltelekommunikationsnetz zum Empfang der Informationen erforderlich. Auch ist hinsichtlich des Endgerätes eine wesentlich einfachere und damit kostengünstigere Ausbildung möglich, da das Endgerät kein herkömmliches Mobiltelefon mit der Möglichkeit der Vollkommunikation unter Einwahl in ein Mobilkommunikationsnetz aufgrund vorgegebener Protokolle, sondem lediglich ein passives Empfangsgerät ist.

Das Endgerät kann den Mobiltelefon-Kommunikationsverkehr in seiner Umgebung völlig passiv mithören und geeignete Informationen herausfiltem. Das passive Mithören kann ohne Einbuchung in ein Mobilfunknetz erfolgen. Wenn die Übertragung der Informationen über einen Kurznachrichtenkanal, insbesondere einen für alle Mobilfunkteilnehmer in einer Zelle empfangbaren Nachrichtenkanal (z.B. GSM-cell broadcast), kann das Mobilfunkgerät ohne hohen Dekodierungsaufwand diese Informationen entschlüsseln. Gegebenenfalls können die Informationen im Endgerät noch hinsichtlich einer Relevanz für den Engerätnutzer überprüft werden. Dabei kann beispielsweise im Verkehrsinformationsbereich die Position und/oder Fahrtrichtung undloder geplante Route und/oder zurückgelegte Route des Endgerätnutzers berücksichtigt werden. Eine Koppelung der Erfindung mit unterschiedlichsten, bereits aus verschiedenen Patentanmeldungen und Veröffentlichungen bekannten Verfahren ist möglich; so kann eine Positionserfassung in einem Fahrzeug (zur Relevanzprüfung empfangener Informationen) zum Beispiel per Koppelnavigation (Vergleich von Kilometerstand und Lenkradeinschlägen mit einer digitalen Karte) per GPS etc. erfolgen; auch unterschiedlichste andere Kombination mit in letzter Zeit veröffentlichten Verfahren und Geräten sind möglich.

Rundspruchnachrichten im Sinne der Erfindung sind als Rundspruch ausgesendete (insbesondere ortsbereichsweise differenzierte) Nachrichten, wie in Europa z.B. unter GSM die digitalen SMS-CB-Rundsprüche sowie andere Punkt-Zu-Mehrfachpunkt-Nachrichten (PtM-MT).

Zur Selektion im Endgerät kann beispielsweise die Netzbetreiberkennung, insbesondere bei Informationen in Form von Rundspruchnachrichten, und/oder eine Seitenkennung in einer Rundspruchnachricht (weil beispielsweise der Wetterbericht oder Verkehrsinformationen immer auf einer bestimmten Seite mit einer zugehörigen Seitenkennung stehen), ein Informations-ldentifier (Verkehrsinformationen haben z.B. die Kennung 4711), das Vorliegen bestimmter Kodierungsmuster (wie Verkehrsinformationen nach einem bestimmten Standard) und die erfolgreiche Dekodierung mit Hilfe im Endgerät vorgegebener Schlüssel sowie andere anwendungsbezogene Kriterien einzeln oder in beliebiger Kombination verwendet werden.

Die Dekodierschlüssel im Endgerät können bei dessen Herstellung implementiert oder nach Vorgabe durch eine Zentrale später eingegeben werden.

Weitere Merkmale und Vorteile ergeben sich aus der nachfolgenden Beschreibung eines Ausführungsbeispiels anhand der Zeichnung. Dabei zeigt als einzige Figur:

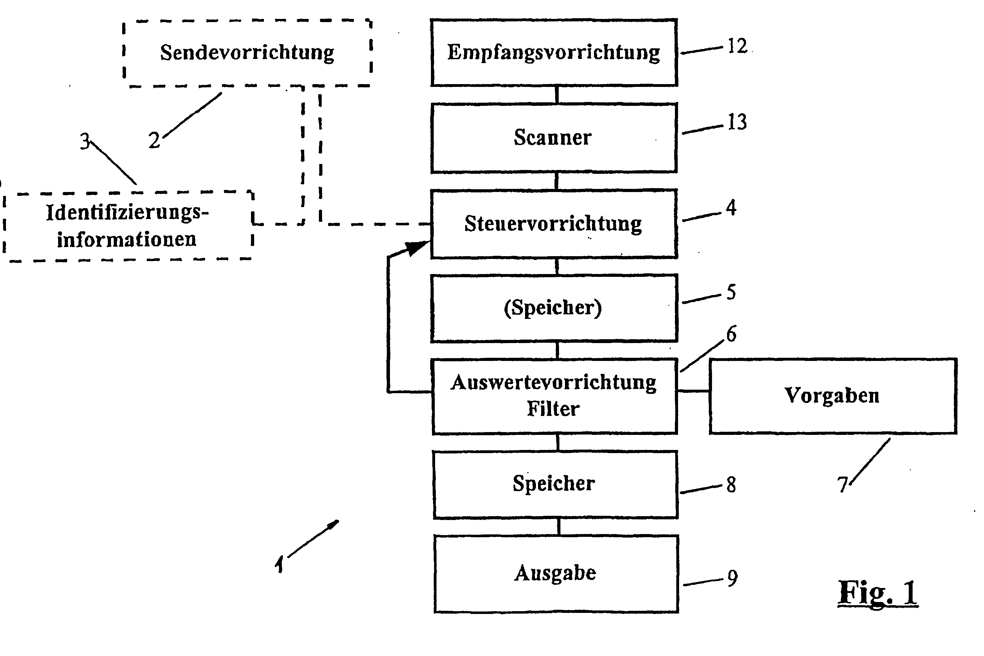

- Fig. 1: den Aufbau eines erfindungsgemäßen Endgerätes (sowie gestrichelt beim erfindungsgemäßen Endgerät nicht mehr erforderliche herkömmliche Komponenten).

Figur 1 zeigt mit durchgezogenen Linien die Komponenten eines erfindungsgemäßen Endgerätes 1 sowie gestrichelt die nicht mehr erforderlichen Komponenten (Sendevorrichtung 2 und Identifizierungsinformationen 3 beim Stand der Technik). Das erfindungsgemäße Endgerät 1 umfaßt eine Empfangsvorrichtung 12, einen Scanner 13, eine Steuervorrichtung 4, einen Speicher 5, eine Auswertevorrichtung mit einem Filter 6, einen Funktionsblock (oder eine Datei) mit Vorgaben 7, einen weiteren Speicher 8 und eine Ausgabevorrichtung 9. Während bei herkömmlichen Endgeräten zum Empfang von Informationen aus einem Mobilfunknetz eine Einwahl des Mobilfunk-Endgeräte in das Mobilfunknetz erfolgt und damit bei herkömmlichen Geräten eine Sendevorrichtung 2 vorliegt, über welche das Endgerät Identifizierungsnformationen 3 (z.B. IMSI aus der SIM) an das Mobilfunknetz übermittelt, umfaßt das vorliegende Endgerät keine Sendevorrichtung, sondern lediglich eine Empfangsvorrichtung und sonstige erforderliche Komponenten. Die Informationen können insbesondere Verkehrsinformationen (über den aktuellen Verkehr oder prognostizierten Verkehr etc.) sein.

Die Empfangsvorrichtung 12 ist ein Funkempfänger, mit welchem über ein Mobilfunknetz gesendete Informationen empfangen werden können. Derartige empfangbare Informationen können über einen Nachrichten-Kanal des Mobilfunknetzes gesendete Informationen, insbesondere als Rundspruchnachricht (cell broadcast) gesendete Informationen sein. Die über die Empfangsvorrichtung 12 empfangenen Informationen können im Endgerät 1 hinsichtlich ihrer Relevanz aufgrund der Mobilfunknetz-Betreiberkennung (z.B. MCC = 262, MNC = 02 für D2 in Deutschland) undloder der Seitenkennung einer Rundspruchseite (z. B. Kurznachrichten-Seite) und/oder aufgrund eines Informations-ldentifiers (Verkehrsinformationen haben die Kennung 4711) und/oder über das Vorliegen bestimmter Kodierungsmuster (z.B. Verkehrsinformationen nach einem bestimmten Standard) und/oder hinsichtlich einer erfolgreichen Dekodierung der Informationen mit einem im Endgerät vorhandenen Schlüssel selektiert werden. Dabei können beispielsweise nur als relevant selektierte Informationen optisch und/oder akustisch über eine optische und/oder akustische Ausgabevorrichtung 9 ausgegeben werden. Die Ausgabevorrichtung 9 kann beispielsweise ein Lautsprecher sein. Sie kann auch ein Display wie auf einem Mobilfunktelefon sein. Ein Endgerät 1 könnte auch ein herkömmliches Mobilfunktelefon sein, das auch in einem bestimmten erfindungsgemäßen Modus (passiv) arbeiten kann, in welchem es ohne sich einzubuchen In ein Mobilfunknetz lediglich Informationen aus dem Mobilfunknetz empfängt.

Der Scanner 13 kann beispielsweise empfangene Informationen dahingehend überprüfen, ob sie hinreichend gut empfangen wurden und kann beispielsweise Mobilfunkkanäle und/oder Basisstationen auswählen, welche einen hinreichend guten Empfang erlauben.

Die Steuervorrichtung 4 kann beispielsweise ein Mikroprozessor sein, der ein Programm im Endgerät abarbeitet; auch kann das Endgerät mit einer elektronischen Schaltung ausgebildet sein.

Im Speicher 5 können von der Empfangsvorrichtung empfangene und vom Scanner 13 als hinreichend gut empfangen erachtete Informationen gespeichert werden. Mit der Auswertevorrichtung einschließlich eines Filters 6 können unter Steuerung der Steuerungsvorrichtung 4 empfangene und gespeicherte Informationen aus dem Speicher 5 hinsichtlich ihrer Relevanz selektiert werden. Dabei können in einem weiteren Speicher gespeicherte Vorgaben 7 für die Selektion berücksichtigt werden, beispielsweise dahingehend von welchem Netzbetreiber, auf welcher Seite, mit welchem Informations-Identifier, mit welchem Kodierungsmuster und bei welchen Dekodierungen eine Selektion als für den Endgerätnutzer nützlich erfolgen kann; in den Vorgaben 7 können auch Dekodierungsinformationen enthalten sein, also Codes, mit welchen im Endgerät empfangene Informationen dekodiert werden können. Als relevant selektierte und ggf. dekodierte Informationen werden im Speicher 8 abgelegt. Aus dem Speicher 8 können sie auf Anfrage oder zyklisch etc. über die Ausgabevorrichtung 9 optisch, akustisch etc. ausgegeben werden.

In der Funktionseinheit 7 können auch Schlössel zum Entschlüsseln verschlüsselt übertragener Meldungen gespeichert werden. Hierdurch kann die Nutzung auf die autorisierten Schlüsselbesitzer beschränkt werden. Durch die ordnungsgemäße Entschlüsselung der Nachrichten kann ferner überprüft werden, ob der eintreffende Datenstrom ohne Übertragungsfehler empfangen wurde. Dadurch kann die Fehlerrate beim Empfang von Meldungen, die mit geringer Feldstärke empfangen wurden, drastisch reduziert werden.

## Patentansprüche

1. Verfahren zum endgerätseitigen Empfangen und Verarbeiten von von einer Zentrale über einen Kanal eines Mobilfunknetzes an eine Vielzahl von nicht definierten Teilnehmern ausgesendeten Informationen,
**dadurch gekennzeichnet,**
**dass** vom Endgerät (12) eines Teilnehmers mindestens ein empfangbarer Kanal des Mobilfunknetzes ausgewählt wird, ohne dass Identifizierungsinformationen vom Endgerät an das Mobilfunknetz übermittelt werden,
wobei die teilnehmerunabhängigen Informationen als Rundspruchnachrichten über den ausgewählten Kanal von der Zentrale an eine Vielzahl von Teilnehmem gesendet werden,
wobei endgeräteseitig nur ein passiver Empfang dieser teilnehmerunabhängigen Informationen ohne Einbuchung in das Mobilfunknetz erfolgt.

2. Verfähren nach Anspruch 1,
**dadurch gekennzeichnet,**
**dass** im Endgerät (12) eine Speicherung, Decodierung, Anzeige oder sonstige unmittelbare Weiterverarbeitung der Informationen ohne Aufnahme einer bidirektionalen Kommunikationsverbindung zur Zentrale über das Mobilfunknetz zum Empfang der Informationen erfolgt.

3. Verfahren nach einem der vorhergehenden Ansprüche,
**dadurch gekennzeichnet,**
**dass** die teilnehmerunabhängigen Informationen als cell-broadcast, insbesondere GSM-CB, von der Zentrale an eine Vielzahl von nicht bestimmten Teilnehmern gesendet werden.

4. Verfahren nach einem der vorhergehenden Ansprüche,
**dadurch gekennzeichnet,**
**dass** die empfangenen Informationen zumindest teilweise einem Endgerätbenutzer dargestellt werden.

5. Verfahren nach einem der vorhergehenden Ansprüche,
**dadurch gekennzeichnet,**
**dass** die empfangenen Informationen gespeichert werden.

6. Verfahren nach Anspruch 5,
**dadurch gekennzeichnet,**
**dass** die empfangenen Informationen nach dem Speichern ausgewertet werden.

7. Verfahren nach einem der vorhergehenden Ansprüche,
**dadurch gekennzeichnet,**
**dass** eine Selektion von empfangenen Informationen hinsichtlich einer Netzbetreiberkennung erfolgt.

8. Verfahren nach einem der vorhergehenden Ansprüche,
**dadurch gekennzeichnet,**
**dass** eine Selektion hinsichtlich einer Identität der Zentrale undloder eines Diensteanbieters erfolgt.

9. Verfahren nach einem der vorhergehenden Ansprüche,
**dadurch gekennzeichnet,**
**dass** eine Selektion hinsichtlich einer Seitenkennung (z.B. Seite 23), insbesondere mindestens einer Seitennummer, mindestens einer von mehreren möglichen Mobilfunk-Rundspruchnachrichtenseiten erfolgt.

10. Verfahren nach einem der vorhergehenden Ansprüche,
**dadurch gekennzeichnet,**
**dass** die unmittelbare Weiterverarbeitung umfaßt, daß eine Selektion hinsichtlich Sequenzen ("Verkehrsinformation:") in den empfangenen Informationen, insbesondere hinsichtlich Anfangssequenzen, in den empfangenen Informationen, erfolgt.

11. Verfahren nach einem der vorhergehenden Ansprüche,
**dadurch gekennzeichnet,**
**daß** eine Selektion hinsichtlich Kennungen der Informationen erfolgt.

12. Verfahren nach einem der vorhergehenden Ansprüche,
**dadurch gekennzeichnet,**
**dass** die Informationen nach vorgebbaren oder vorgegebenen anwendungsbezogenen Kriterien selektiert werden.

13. Verfahren nach einem der vorstehenden Ansprüche,
**dadurch gekennzeichnet,**
**dass** die empfangenen Informationen decodiert werden.

14. Verfahren nach Anspruch 13,
**dadurch gekennzeichnet,**
**dass** die empfangenen Informationen mit vorgebbarer Schlüsseln decodiert werden.

15. Verfahren nach einem der vorhergehenden Ansprüche,
**dadurch gekennzeichnet,**
**dass** endgerätseitig zusätzlich mindestens ein Sender inplementiert ist, der eine bidirektionale Nutzung mindestens eines Mobilfunknetzes erlaubt und dass dabei vorzugsweise die Auswahl des zum Empfang von empfangbaren Rundspruchnachrichten genutzten Kanals von der aktuellen Verfügbarkeit des mindestens einen Mobilfunknetzes abhängt.

16. Verfahren nach einem der vorstehenden Ansprüche,
**dadurch gekennzeichnet,**
**dass** die verschlüsselt ausgesendeten Informationen im Endgerät mit dort gespeicherten oder vom Endgerät-Nutzer abgefragten Schlüsseln entschlüsselt werden.

17. Verfahren nach einem der vorhergehenden Ansprüche,
**dadurch gekennzeichnet,**
**dass** durch eine endgerätseitige Entschlüsselung und/oder Dekodierung Übertragungsfehler erkannt und/oder korrigiert werden.

18. Endgerät mit Mitteln zur Durchführung des Verfahrens nach einem der vorhergehenden Ansprüche, zum passiven Empfang von von einer Zentrale über einen Mobilfunkkanal gesendeten Informationen, mit einer nur passiv ohne Einbindung in ein Mobilfunknetz empfangenden Empfangsvorrichtung (12),
einer Steuervorrichtung (4), einem Speicher (5) zur Speicherung der empfangenen Informationen, sowie einer Auswertevorrichtung mit einem Filter (6) zur Selektierung der empfangenen und gespeicherten Informationen und einer Ausgabevorrichtung (9).

19. Endgerät nach Anspruch 18,
**dadurch gekennzeichnet,**
**dass** es ein Programm zur Durchführung des Verfahrens aufweist.

20. Endgerät nach Anspruch 18 oder 19,
**dadurch gekennzeichnet,**
**dass** es eine elektronische Schaltung zum Durchführen des Verfahrens aufweist.

21. Endgerät nach einem der Ansprüche 18 bis 20,
**dadurch gekennzeichnet,**
**dass** es eine Emfangsvorrichtung (12) aufweist, durch welche nur ein Mobilfunk-Rundspruchnachrichten-Empfang möglich ist.

22. Endgerät nach Anspruch 21,
**dadurch gekennzeichnet,**
**dass** es kommunikationszugangsberichtigungsunabhängig, insbesondere ohne SIM-Zugangsberechtigung in der Empfangsvorrichtung (12), aufgebaut ist.

23. Endgerät nach einem der Ansprüche 18 bis 22,
**dadurch gekennzeichnet,**
**dass** es eine Decodiereinrichtung (6) für empfangene Informationen aufweist.

24. Endgerät nach einem der Ansprüche 18 bis 23,
**dadurch gekennzeichnet,**
**dass** das Endgerät (1) eine Kommunikationseinrichtung (12) aufweist, die nur einen Simplex-Empfangsbetrieb ermöglicht.

25. Endgerät nach einem der Ansprüche 18 bis 24,
**dadurch gekennzeichnet,**
**dass** das Endgerät (1) zusätzlich zur passiven Empfangseinrichtung (12) eine Sendeeinrichtung zur bidirektionalen Nutzung mindestens eines Mobilfunknetzes, insbesondere in Form eines mit ihm verbundenen Mobilfunkgerätes, oder einen Anschluß hierfür aufweist.

26. Endgerät nach einem der Ansprüche 18 bis 25,
**dadurch gekennzeichnet,**
**dass** es eine Auswahleinrichtung zur Auswahl eines Kanals für empfangbare Rundspruchnachrichten aus mehreren Kanälen unter Berücksichtigung der aktuellen Verfügbarkeit undloder Empfangbarkeit des mindestens einen Mobilfunknetzes oder Kanals aufweist.

27. Endgerät nach einem der Ansprüche 18 bis 26,
**dadurch gekennzeichnet,**
**dass** es eine Entschlüsselungseinrichtung zum Entschlüsseln der empfangenen Informationen aufweist.

28. Endgerät nach Anspruch 27,
**dadurch gekennzeichnet,**
**dass** es einen Speicher mit einem Schlüssel für die Entschlüsselungseinrichtung und/oder eine Eingabeeinrichtung für die Eingabe des Schlüssels durch den Endgerät-Nutzer aufweist.

29. Endgerät nach einem der Ansprüche 18 bis 27,
**dadurch gekennzeichnet,**
**dass** es eine Fehlererkennungseinrichtung zum Erkennen und/oder Korrigieren von Übertragungsfehlem in den empfangenen Informationen aufweist, welche das Ergebenis der Entschlüsselung und/oder andere Fehlererkennungsverfahren verwendet.

## Claims

1. A method for the reception and processing, by a terminal, of information transmitted from an exchange via a channel of a mobile radio network to a plurality of undefined subscribers, **characterised in that** at least one receivable channel of the mobile radio network is selected by the terminal (12) of a subscriber without identification information being transmitted from the terminal to the mobile radio network, wherein the subscriber-independent information is transmitted as broadcast news via the selected channel from the exchange to a plurality of subscribers, and wherein the terminal only passively receives this subscriber-independent information without connection to the mobile radio network.

2. A method according to claim 1, **characterised in that** storage, decoding, display or other immediate further processing of the information takes place in the terminal (12) without establishing a bidirectional communication link to the exchange via the mobile radio network in order to receive the information.

3. A method according to any one of the preceding claims, **characterised in that** the subscriber-independent information is transmitted as cell broadcast, in particular GSM-CB, from the exchange to a plurality of unspecified subscribers.

4. A method according to any one of the preceding claims, **characterised in that** at least some of the received information is displayed to a terminal user.

5. A method according to any one of the preceding claims, **characterised in that** the received information is stored.

6. A method according to claim 5, **characterised in that** the received information is evaluated after storage.

7. A method according to any one of the preceding claims, **characterised in that** received information is selected for network operator identification.

8. A method according to any one of the preceding claims, **characterised in that** selection is carried out for identification of the exchange and/or a service provider.

9. A method according to any one of the preceding claims, **characterised in that** selection is carried out for page identification (e.g. page 23), in particular for at least one page number, at least one of several possible mobile radio broadcast-news pages.

10. A method according to any one of the preceding claims, **characterised in that** the immediate further processing comprises selection of sequences ("traffic information:") in the received information, in particular initial sequences in the received information.

11. A method according to any one of the preceding claims, **characterised in that** selection is carried out for identification of the information.

12. A method according to any one of the preceding claims, **characterised in that** the information is selected on the basis of predeterminable or predetermined application-related criteria.

13. A method according to any one of the preceding claims, **characterised in that** the received information is decoded.

14. A method according to claim 13, **characterised in that** the received information is decoded by means of predeterminable keys.

15. A method according to any one of the preceding claims, **characterised in that** at the terminal at least one transmitter is additionally implemented which permits bidirectional use of at least one mobile radio network, and **in that** the selection of the channel used for the reception of receivable broadcast news is preferably dependent upon the current availability of the at least one mobile radio network.

16. A method according to any one of the preceding claims, **characterised in that** the information, which is sent encrypted, is decrypted in the terminal by means of keys which are stored therein or are interrogated by the terminal user.

17. A method according to any one of the preceding claims, **characterised in that** transmission errors are detected and/or corrected by decryption and/or decoding at the terminal.

18. A terminal provided with means for carrying out the method, according to any one of the preceding claims, for the passive reception of information transmitted from an exchange via a mobile radio channel, comprising a receiving device (12) only passively receiving without connection to a mobile radio network, a control device (4), a memory (5) for storing the received information, an evaluation device with a filter (6) for selecting the received and stored information and an output device (9).

19. A terminal according to claim 18, **characterised in that** it has a program for carrying out the method.

20. A terminal according to claim 18 or 19, **characterised in that** it has an electronic circuit for carrying out the method.

21. A terminal according to any one of claims 18 to 20, **characterised in that** it has a receiving device (12), by means of which only one mobile radio broadcast-news reception is possible.

22. A terminal according to claim 21, **characterised in that** it is set up independently of communication access authorisation, in particular without SIM access authorisation in the receiving device (12).

23. A terminal according to any one of claims 18 to 22, **characterised in that** it has a decoding device (6) for received information.

24. A terminal according to any one of claims 18 to 23, **characterised in that** the terminal (1) has a communication device (12) which only permits a simplex receive mode.

25. A terminal according to any one of claims 18 to 24, **characterised in that** the terminal (1), in addition to the passive receiving device (12), has a transmission device for the bidirectional use of at least one mobile radio network, in particular in the form of a mobile radio set connected thereto, or has a connection therefor.

26. A terminal according to any one of claims 18 to 25, **characterised in that** it has a selection device for selecting a channel for receivable broadcast news from a plurality of channels, taking into consideration the current availability and/or receivability of the at least one mobile radio network or channel.

27. A terminal according to any one of claims 18 to 26, **characterised in that** it has a decryption device for decrypting the received information.

28. A terminal according to claim 27, **characterised in that** it has a memory with a key for the decryption device and/or an input device for the terminal user to input the key.

29. A terminal according to any one of claims 18 to 27, **characterised in that** it has an error detection device for the detection and/or correction of transmission errors in the received information, said error detection device using the result of decryption and/or other error detection methods.

## Revendications

1. Procédé pour recevoir et traiter du côté d'un terminal des informations émises par une centrale par l'intermédiaire d'un canal d'un réseau de téléphonie mobile à une pluralité de participants non définis,
**caractérisé en ce qu'**au moins un canal pouvant recevoir du réseau de téléphonie mobile est sélectionné par le terminal (12) d'un participant, sans que des informations d'identification soient transmises du terminal au réseau de téléphonie mobile, les informations indépendantes du participant étant émises comme messages à diffusion générale par l'intermédiaire du canal sélectionné de la centrale à une pluralité de participants, uniquement une réception passive de ces informations indépendantes du participant étant effectuée dans le réseau de téléphonie mobile, du côté du terminal, sans comptabilisation.

2. Procédé selon la revendication 1,
**caractérisé en ce que**, dans le terminal (12), il est effectué une mémorisation, un décodage, un affichage ou un autre traitement direct quelconque des informations sans établir une liaison de communication bidirectionnelle vers la centrale par l'intermédiaire du réseau de téléphonie mobile pour la réception des informations.

3. Procédé selon une des revendications précédentes,
**caractérisé en ce que** les informations indépendantes du participant sont envoyées comme diffusion cellulaire, en particulier GSM-CB, de la centrale à une pluralité de participants non déterminés.

4. Procédé selon une des revendications précédentes,
**caractérisé en ce que** les informations reçues sont présentées au moins partiellement à un utilisateur de terminal.

5. Procédé selon une des revendications précédentes,
**caractérisé en ce que** les informations reçues sont mémorisées.

6. Procédé selon la revendication 5,
**caractérisé en ce que** les informations reçues sont évaluées après la mémorisation.

7. Procédé selon une des revendications précédentes,
**caractérisé en ce qu'**une sélection d'informations reçues est effectuée relativement à une caractéristique de l'opérateur du réseau.

8. Procédé selon une des revendications précédentes,
**caractérisé en ce qu'**une sélection est effectuée relativement à une identité de la centrale et/ou d'un fournisseur de services.

9. Procédé selon une des revendications précédentes,
**caractérisé en ce qu'**une sélection est effectuée relativement à une caractéristique de page (par exemple page 23), en particulier au moins un numéro de page, d'au moins une de plusieurs pages de messages à diffusion générale de radiotéléphonie mobile possibles.

10. Procédé selon une des revendications précédentes,
**caractérisé en ce que** le traitement ultérieur direct comporte qu'une sélection est effectuée relativement à des séquences ("informations de trafic") dans les informations reçues, en particulier relativement à des séquences de début, dans les informations reçues.

11. Procédé selon une des revendications précédentes,
**caractérisé en ce qu'**une sélection est effectuée relativement à des caractéristiques des informations.

12. Procédé selon une des revendications précédentes,
**caractérisé en ce que** les informations sont sélectionnées selon des critères pouvant être prédéfinis ou prédéfinis par rapport à l'utilisation.

13. Procédé selon une des revendications précédentes,
**caractérisé en ce que** les informations reçues sont décodées.

14. Procédé selon la revendication 13,
**caractérisé en ce que** les informations reçues sont décodées par des codes pouvant être prédéfinis.

15. Procédé selon une des revendications précédentes,
**caractérisé en ce que**, du côté du terminal, il est implanté de façon supplémentaire au moins un émetteur qui permet une utilisation bidirectionnelle d'au moins un réseau de téléphonie mobile, et **en ce que**, de plus, avantageusement, le choix du canal utilisé pour la réception de messages pouvant être reçus à diffusion générale dépend de la disponibilité actuelle du réseau de téléphonie mobile.

16. Procédé selon une des revendications précédentes,
**caractérisé en ce que** les informations émises de façon codée sont décodées dans le terminal par des codes qui y sont mémorisés ou appelés par l'utilisateur du terminal.

17. Procédé selon une des revendications précédentes,
**caractérisé en ce que** des défauts de transmission sont reconnus et/ou corrigés par un décodage du côté du terminal.

18. Terminal comportant des moyens pour la mise en oeuvre du procédé selon une des revendications précédentes, pour la réception passive d'informations émises par une centrale par l'intermédiaire d'un canal de radiotéléphonie mobile, comportant un dispositif de réception (12) recevant uniquement de façon passive sans intégration dans un réseau de téléphonie mobile, un dispositif de commande (4), une mémoire (5) pour mémoriser les informations reçues, ainsi qu'un dispositif d'évaluation comportant un filtre (6) pour la sélection des informations reçues et mémorisées, et un dispositif de sortie (9).

19. Terminal selon la revendication 18,
**caractérisé en ce qu'**il présente un programme pour la mise en oeuvre du procédé.

20. Terminal selon la revendication 18 ou 19,
**caractérisé en ce qu'**il présente un circuit électronique pour la mise en oeuvre du procédé.

21. Terminal selon une des revendications 18 à 20,
**caractérisé en ce qu'**il présente un dispositif de réception (12) grâce auquel uniquement une réception de messages à diffusion générale par radiotéléphonie mobile est possible.

22. Terminal selon la revendication 21,
**caractérisé en ce qu'**il est réalisé de façon indépendante d'une autorisation d'accès de communication, en particulier sans autorisation d'accès SIM, dans le dispositif de réception (12).

23. Terminal selon une des revendications 18 à 22,
**caractérisé en ce qu'**il présente un dispositif de décodage (6) pour des informations reçues.

24. Terminal selon une des revendications 18 à 23,
**caractérisé en ce que** le terminal (1) présente un dispositif de communication (12) qui permet uniquement un fonctionnement de réception simplex.

25. Terminal selon une dés revendications 18 à 24,
**caractérisé en ce que** le terminal (1), de façon supplémentaire au dispositif de réception passif (12), présente un dispositif d'émission pour l'utilisation bidirectionnelle d'au moins un réseau de radiotéléphonie mobile, en particulier sous la forme d'un appareil de radiotéléphonie mobile relié à celui-ci ou d'un raccord pour cela.

26. Terminal selon une des revendications 18 à 25,
**caractérisé en ce qu'**il présente un dispositif de sélection pour la sélection d'un canal pour des messages à diffusion générale pouvant être reçus à partir de plusieurs canaux en tenant compte de la capacité de réception et/ou de la disponibilité actuelle du réseau de radiotéléphonie mobile ou du canal.

27. Terminal selon une des revendications 18 à 26,
**caractérisé en ce qu'**il présente un dispositif de décodage pour décoder les informations reçues.

28. Terminal selon la revendication 27,
**caractérisé en ce qu'**il présente une mémoire ayant un code pour le dispositif de décodage et/ou un dispositif d'entrée pour l'entrée du code par l'utilisateur du terminal.

29. Terminal selon une des revendications 18 à 27,
**caractérisé en ce qu'**il présente un dispositif de reconnaissance d'erreurs pour reconnaître et/ou corriger des erreurs de transmission dans les informations reçues, lequel utilise le résultat du décodage et/ou d'autres processus de reconnaissance d'erreurs.
